# EUROPEAN PATENT SPECIFICATION

(11) **EP 4 220 747 B1**
(45) Date of publication and mention of the grant of the patent: **22.10.2025**
(21) Application number: 22788382.4
(22) Date of filing: 12.04.2022
(51) Int. Cl.: H01M 4/02, H01M 4/04, H01M 4/66, H01M 10/04, H01M 4/13, H01M 4/139, H01M 4/64, H01M 4/70, H01M 10/052, H01M 10/0585

(54) **ELECTRODE AND METHOD FOR MANUFACTURING THE SAME**
ELEKTRODE UND HERSTELLUNGSVERFAHREN DAFÜR
ÉLECTRODE ET SON PROCÉDÉ DE FABRICATION

(30) Priority: 15.04.2021 KR 20210049475; 03.02.2022 KR 20220014452
(43) Date of publication of application: 02.08.2023
(73) Proprietor: LG Energy Solution, Ltd., Seoul 07335 (KR)
(72) Inventor: CHOI, Jinhyeong, Daejeon 34122 (KR)
(74) Representative: Plasseraud IP
(86) International application number: PCT/KR2022/005240
(87) International publication number: WO 2022/220526

(56) References cited:
- JP-A- 2009 302 074
- JP-A- 2010 212 143
- JP-A- 2017 107 869
- KR-A- 20150 128 063
- KR-A- 20160 007 397
- KR-A- 20220 142 916
- KR-B1- 101 199 125
- KR-B1- 102 363 870
- US-A1- 2011 177 394
- US-A1- 2013 344 419
- US-A1- 2014 004 389
- US-A1- 2016 214 266
- US-A1- 2017 222 254
- US-A1- 2021 226 256
- US-A1- 2024 006 616
- VIVEK ANUPAM ET AL: "Vaporizing Foil Actuator: A Versatile Tool for High Energy-rate Metal Working", PROCEDIA ENGINEERING, ELSEVIER BV, NL, vol. 81, 15 October 2014 (2014-10-15), pages 2129 - 2134, XP029078489, DOI: 10.1016/J.PROENG.2014.10.297

## Description

### CROSS-REFERENCE TO RELATED APPLICATION

The present application claims the benefit of the priority of Korean Patent Application Nos. 10-2021-0049475, filed on April 15, 2021, and 10-2022-0014452, filed on February 03, 2022.

### TECHNICAL FIELD

The present invention relates to an electrode and a method for manufacturing the electrode, and more particularly, to an electrode capable of preventing a bending phenomenon of an electrode active material coating or a delamination or cracking phenomenon of an electrode active material from occurring and a method for manufacturing the electrode.

### BACKGROUND ART

Secondary batteries are rechargeable unlike primarily batteries, and also, the possibility of compact size and high capacity is high. Thus, recently, many studies on secondary batteries are being carried out. Such a secondary battery is manufactured in a shape in which one battery cell is packaged in a pack form or a pack shape in which several tens of battery cells are connected to each other. As a result, secondary batteries are being widely used for power sources for driving motors of vehicles.

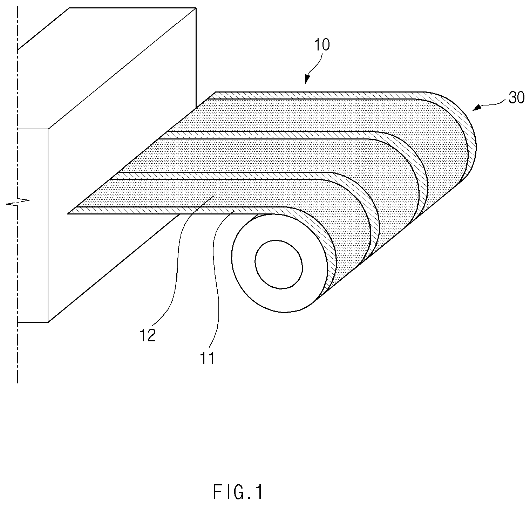

In general, an electrode 10 of a secondary battery is manufactured by applying (coating) an electrode active material 12 on a metal base material (metal collector) 11 (see FIG. 1).

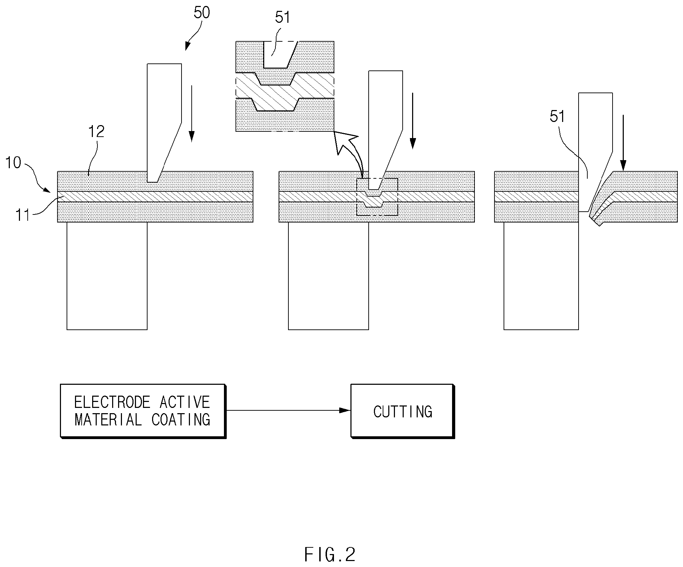

FIG. 1 is a perspective view illustrating a state in which an electrode is manufactured and then wound on a roll according to a related art. FIG. 2 is a cross-sectional view illustrating a state in which the electrode is unwound from the roll manufactured in FIG. 1 and cut using a cutter so as to use the electrode by implementing the electrode in a specific shape.

Referring to FIG. 1, the electrode 10 coated with an electrode active material 12 is wound on a (electrode) roll 30 as illustrated in FIG. 1 because the electrode 10 has to be transferred or stored until used. When it comes to the need to use the electrode in a specific shape while being wound and stored in this manner, the electrode is unwound from the (electrode) roll and cut using a cutter 50 as illustrated in FIG. 2 to manufacture an electrode having a desired size.

In this process, there have been two problems in the related art.

First, in the existing electrode, the electrode 10 coated with the electrode active material 12 is wound on the roll 30, and a bending phenomenon of the electrode active material coating or a delamination or cracking phenomenon of an electrode active material occurs at a winding part of the roll 30. That is, when the electrode 10 is bent, tension is applied to the electrode active material 12 to cause the delamination or cracking phenomenon.

Second, in the process according to the related art, since a process of cutting the electrode is performed after applying the electrode active material, the delamination phenomenon of the electrode active material occurred in the cutting process. That is, since a cutting blade 51 of the cutter 50 has a thickness as illustrated in FIG. 2, when digging into the electrode active material 12 to cut the electrode 10, the tension is applied to the electrode active material 12, and thus, the electrode active material 12 is delaminated.

As described above, in the method for manufacturing the electrode according to the related art, there is a problem in that the delamination of the electrode active material inevitably occurs during the manufacturing process. Both KR 2015 0128063 A and KR 2016 0007397 A deal with this problem and present alternative solutions.

### DISCLOSURE OF THE INVENTION

### TECHNICAL PROBLEM

The present invention has been devised to solve the above problem, and an object of the present invention is to provide an electrode capable of preventing a bending phenomenon of an electrode active material coating or a delamination or cracking phenomenon of an electrode active material from occurring and a method for manufacturing the electrode.

### TECHNICAL SOLUTION

An electrode according to the present invention is defined in claim 1 and includes a base collector made of a metal material and a unit electrode attached to the base collector, wherein the unit electrode includes a unit collector made of a metal material and having a size less than that of the base collector and an electrode active material applied on one surface of the unit collector.

The unit electrode is provided in plurality, and each of the unit electrodes has a block shape.

The base collector may have a plate shape.

The unit collector may have a plate shape, and the electrode active material may be applied to an entire top surface of the unit collector.

The plurality of unit electrodes may be arranged to form columns and rows on one surface of the base collector.

A configuration in which the plurality of unit electrodes are arranged may correspond to that of the base collector.

The electrode may further include an electrode tab part extending from one end of the base collector.

A method for manufacturing an electrode according to the present invention is defined in claim 7 and includes a unit collector manufacturing process of cutting a collector base material made of a metal material to have a predetermined area and shape on a plan view, thereby manufacturing a unit collector, a unit electrode manufacturing process of applying an electrode active material on one surface of the unit collector to manufacture a unit electrode, and a unit electrode attachment process of attaching the unit electrode on an entire base collector made of a metal material and having a size greater than that of the unit collector.

In the unit electrode attachment process, the unit electrode having a block shape is attached in plurality on the base collector.

In the unit electrode attachment process, the plurality of unit electrodes may be arranged to form columns and rows on one surface of the base collector.

In the unit electrode attachment process, the plurality of unit electrodes may be arranged so that the configuration formed by arranging the plurality of unit electrodes corresponds to that of the base collector.

The method may further include a unit electrode storage process of stacking and storing the unit electrodes between the unit electrode manufacturing process and the unit electrode attachment process.

The method may further include a unit electrode inspection process of inspecting whether the unit electrode is defective to discard the defective unit electrode between the unit electrode manufacturing process and the unit electrode storage process.

An electrode assembly including the electrode according to the present invention is defined in claim 12.

### ADVANTAGEOUS EFFECTS

In the electrode and the method for manufacturing the electrode according to the present invention, the bending phenomenon of the electrode active material coating or the delamination or cracking phenomenon of the electrode active material may be prevented from occurring at the electrode.

### BRIEF DESCRIPTION OF THE DRAWINGS

FIG. 1 is a perspective view illustrating a state in which an electrode is manufactured and then wound on a roll according to a related art.
FIG. 2 is a cross-sectional view illustrating a state in which the electrode is unwound from the roll manufactured in FIG. 1 and cut using a cutter so as to use the electrode by implementing the electrode in a specific shape.
FIG. 3 is a view illustrating an electrode according to Embodiment 1 of the present invention.
FIG. 4 is a plan view illustrating a state in which a unit electrode of the electrode is attached to a base collector having various sizes and shapes according to Embodiment 1 of the present invention.
FIG. 5 is a diagram illustrating a main process in a method for manufacturing an electrode according to Embodiment 2 of the present invention.
FIG. 6 is a conceptual view illustrating some processes in the method for manufacturing the electrode according to Embodiment 2 of the present invention.
FIG. 7 is a view illustrating a unit electrode inspection process in the method for manufacturing the electrode according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

### Embodiment 1

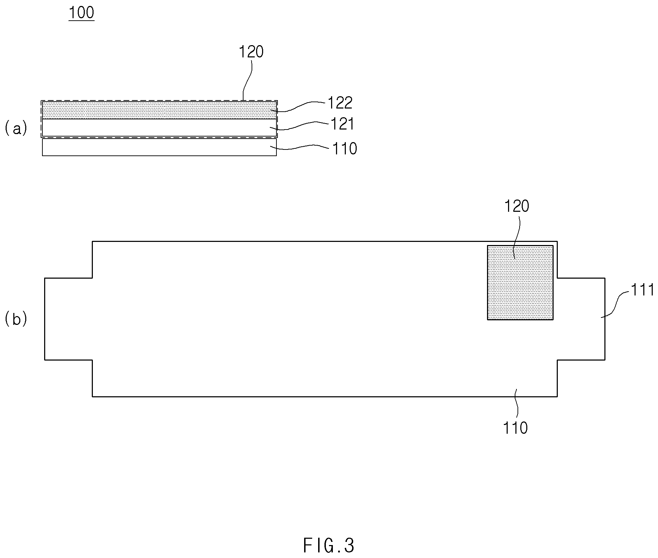

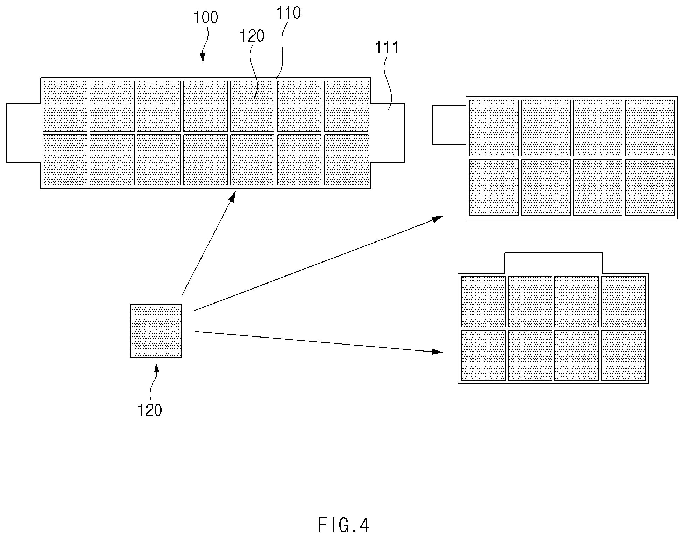

FIG. 3 is a view illustrating an electrode according to Embodiment 1 of the present invention. FIG. 4 is a plan view illustrating a state in which a unit electrode of the electrode is attached to a base collector having various sizes and shapes according to Embodiment 1 of the present invention.

Referring to FIG. 3, an electrode 100 according to Embodiment 1 of the present invention includes a base collector 110 and a unit electrode 120. The base electrode 100 is a collector made of a metal material and forms the lowest base surface of the electrode 100. The unit electrode 120 may be attached to the base collector 110. The unit electrode 120 is made of a metal material and includes a unit collector 121 having a size less than that of the base collector 110 and an electrode active material 122 applied to one surface of the unit collector 121. Here, the unit collector 121 may also have a plate shape. The base collector 110 may also have a plate shape. The unit electrode 120 may be provided in plurality. In addition, each of the unit electrodes 120 may have a block shape.

FIG. 3(b) illustrates a state in which one unit electrode 120 is attached to one base collector 110. Of course, in the electrode 100 according to Embodiment 1 of the present invention, the plurality of unit electrodes 120 are attached to the base collector 110 to form the electrode 100. However, for convenience of description, FIG. 3(b) illustrates a state in which only one unit electrode 120 is attached to the base collector 110. In addition, FIG. 3(a) illustrates a side view when a side portion of the electrode 100 is viewed at a position at which the unit electrode 120 illustrated in FIG. 3(b) is attached. Referring to FIG. 3(a), the base collector 110 is disposed at the lowest position, and the unit electrode 120 is attached on the base collector (in FIG. 3(a), the unit electrode 120 is indicated by a dotted line box).

In addition, the unit electrode 120 may also include a unit collector 121 disposed at a lower side and an electrode active material 122 applied to a top surface of the unit collector. Here, the electrode active material 122 may be applied on an entire top surface of the unit collector 121. The electrode active material 122 may be applied to the top surface of the unit collector 121, and a bottom surface of the unit collector 121 may be attached to the base collector.

When the electrode 100 is manufactured in this manner, a bending phenomenon of coating of the electrode active material 122 or a delamination or cracking phenomenon of the electrode active material 122 may be prevented from occurring at the electrode.

Specifically, in the existing electrode, as the electrode coated with the electrode active material is wound on a roll, the bending phenomenon of the electrode active material coating or the delamination or cracking phenomenon of the electrode active material occurs at the winding part of the roll. However, in the case of the present invention, since the block-shaped unit electrode 120 needs only to be attached to the plate-shaped base collector 110, the tension due to the bending does not act on the electrode active material 122 to prevent the delamination or cracking phenomenon of the electrode active material 122 from occurring.

Referring to FIG. 4, the electrode 100 according to Embodiment 1 of the present invention may have a configuration in which a plurality of unit electrodes 120 are arranged to form columns and rows on one surface of the base collector 110. In addition, the configuration in which the plurality of unit electrodes 120 are arranged may correspond to that of the base collector 110. When formed in this manner, the electrode 100 having various shapes and sizes may be easily manufactured. FIG. 4 illustrates an example in which three types of electrodes 100 are manufactured. As illustrated in FIG. 4, even if shapes of the electrodes 100 are different from each other, since all the electrodes are capable of being manufactured by attaching the same unit electrode 120, the electrodes 100 may be more efficiently manufactured.

In addition, in the process according to the related art, since the process of cutting the electrode 100 is performed after applying the electrode active material 122, the delamination phenomenon of the electrode active material 122 occurs in the cutting process. However, in case of the present invention, since the cutting is performed in a state of the collector, on which the electrode active material is not applied, and the process of cutting the electrode is not performed after applying the electrode active material 122, the delamination phenomenon of the electrode active material 122 may be prevented from occurring in the cutting process.

Referring to FIGS. 3 and 4, the electrode 100 according to Embodiment 1 of the present invention may further include an electrode tab part 111 extending from one end of the base collector 110 for convenience in manufacturing. When the electrode tab part 111 is continuously formed on the collector, a process of attaching the electrode tab may be omitted, and thus, production efficiency may be further improved.

### Embodiment 2

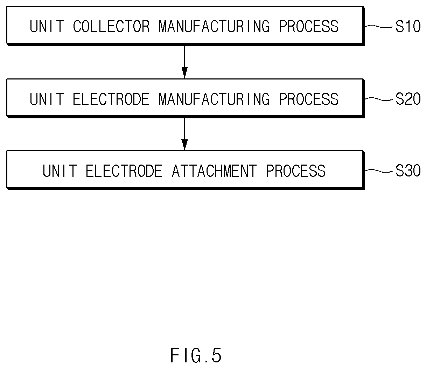

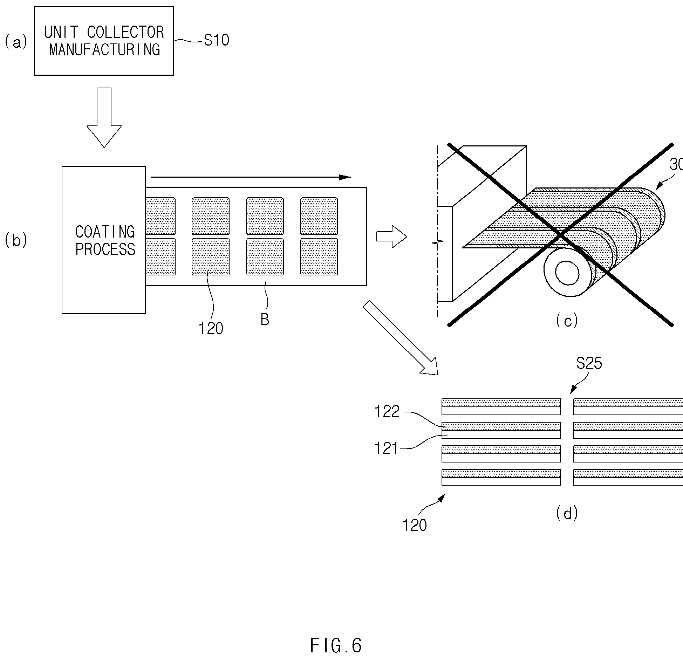

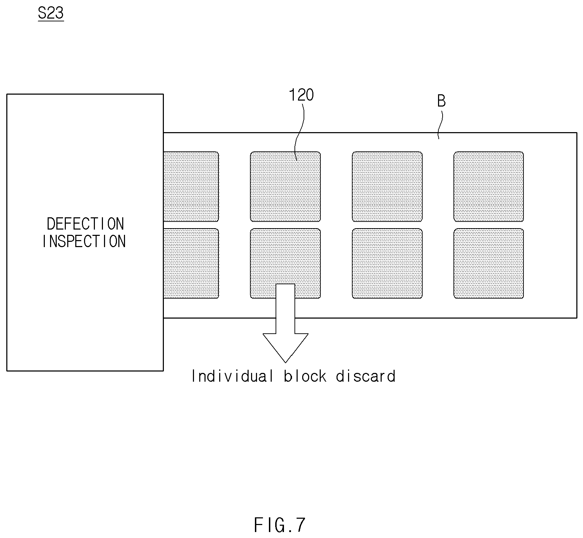

FIG. 5 is a diagram illustrating a main process in a method for manufacturing an electrode according to Embodiment 2 of the present invention. FIG. 6 is a conceptual view illustrating some processes in the method for manufacturing the electrode according to Embodiment 2 of the present invention. FIG. 7 is a view illustrating a unit electrode inspection process in the method for manufacturing the electrode according to Embodiment 2 of the present invention.

Embodiment 2 of the present invention is different from Embodiment 1 in that Embodiment 2 relates to a method for manufacturing the electrode according to Embodiment 1.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 5, a method of manufacturing an electrode 100 according to Embodiment 2 of the present invention may include a unit collector manufacturing process (S10), a unit electrode manufacturing process (S20), and a unit electrode attachment process (S30).

The unit collector manufacturing process S10 may be a process of manufacturing a unit collector 121 by cutting a collector base material made of a metal material to have a predetermined area and shape based on a plan view. The size and shape of the unit collector 121 may be determined according to the purpose and situation of the design. Mass production of the unit collector 121 may be performed according to the size and shape of the unit collector 121, which are determined once. The plurality of unit collectors 121 manufactured in this manner may have the same shape and size as each other. In addition, for convenience of the attachment, the unit collector 121 may be formed in a rectangular (or square) shape and may also be formed in a thin plate shape.

The unit electrode manufacturing process (S20) may be a process of applying an electrode active material on one surface of the unit collector 121 to manufacture a unit electrode 120. As illustrated in (b) of FIG. 6, a process of applying an electrode active material 122 may be performed while the plurality of unit collectors 121 having the same shape are transferred on a transfer belt B.

In addition, the unit electrode attachment process (S30) may be a process of attaching the electrode 120, which is previously manufactured, on the base collector 110 made of a metal material and having a size greater than that of the unit collector 121 (see FIG. 4). In the unit electrode attachment process (S30), a plurality of unit electrodes 120, each of which has a block shape, may be attached to the base collector 110.

In this case, the attachment (or adhesion) between the base collector 110 and the unit electrode 120 may be performed through a vaporized foil actuator welding (VFAW) method. When the unit electrode 120 adheres to the base collector 110 through the vaporized foil actuator welding, the adhesion between conductive metals having low resistance may be achieved.

The plurality of unit electrodes 120 may be arranged to form columns and rows on one surface of the base collector 110. In addition, the configuration in which the plurality of unit electrodes 120 are arranged may correspond to that of the base collector 110. When formed in this manner, the electrode 100 having various shapes and sizes may be easily manufactured.

Referring to FIG. 6, a unit electrode storage process (S25) of stacking and storing the unit electrodes 120 may be further performed between the unit electrode manufacturing process (S20) and the unit electrode attachment process (S30). FIG. 6(d) illustrates a method in which the unit electrodes 120 are stacked and stored in the unit electrode storage process (S25).

According to the related art, as illustrated in FIG. 6(c), as the electrode coated with the electrode active material is wound on the roll 30, the bending phenomenon of the electrode active material or the delamination phenomenon of the electrode active material occurred at the winding part of the roll 300, and also, the cracking phenomenon occurred in addition to the bending or delamination phenomenon. However, as illustrated in FIGS. 6(a), (b) and (d), in case of the present invention, since only the processes of transferring, stacking, and storing the block-shaped unit electrodes are performed, and the process of winding the unit electrode on the roll is not performed, the delamination or cracking phenomenon of the electrode active material 122 may be prevented from occurring. Even after the storage process, since there is only the process of attaching the unit electrode on the base collector, the delamination phenomenon of the electrode active material may not occur during the entire processes.

In addition, referring to FIG. 7, the method of manufacturing the electrode according to Embodiment 2 of the present invention may further include a unit electrode inspection process (S23) of inspecting whether the unit electrode 120 is defective to discard the defective unit electrode 120 between the unit electrode manufacturing process (S20) and the unit electrode storage process (S25). The unit electrode inspection process (S23) may be performed on the unit electrode 120 manufactured in the unit electrode manufacturing process (S20). Whether the electrode 100 is defective may be performed immediately after the unit electrode manufacturing process (S20) is completed. In addition, with respect to the unit electrode 120 that is determined to be defective, only one unit electrode 120 that is determined to be defective may be discarded.

In the related art, since the electrode 100 is wound in the roll shape, when a specific portion of the electrode 100 is defective, the entire roll 30 has to be discarded. However, in the method for manufacturing the electrode according to Embodiment 2 of the present invention, only one unit electrode 120 that is determined to be defective may be discarded to prevent production costs from increasing due to the discarding of the entire roll. As a result, the result of productivity improvement may also be obtained.

### Embodiment 3

Example 3 of the present invention is different from Example 1 in that Embodiment 3 relates to an electrode assembly manufactured using the electrode according to Embodiment 1.

The contents that are duplicated with Embodiment 1 will be omitted as much as possible, and Embodiment 3 will be described with a focus on the differences. That is, it is obvious that the contents that are not described in Embodiment 3 may be regarded as the contents of Embodiment 1 if necessary.

An electrode assembly (not shown) according to Example 3 of the present invention may be an electrode assembly formed by alternately stacking separators on the electrodes 100 manufactured in Embodiment 1.

That is, in the electrode assembly according to Embodiment 3 of the present invention, the electrode 100 may include a base collector 110 made of a metal material and a unit electrode 120 attached to the base collector 110.

Here, the unit electrode 120 may be made of a metal material and include a unit collector 121 having a size less than that of the base collector 110 and an electrode active material 122 applied to one surface of the unit collector 121.

FIG. 4 illustrates the electrode 100 formed by attaching a plurality of unit electrodes 120 to the base collector 110. Thus, when the electrodes 100 and the separators are alternately stacked, the electrode assembly according to Example 3 of the present invention may be manufactured.

While the embodiments of the present invention have been described with reference to the specific embodiments, it will be apparent to those skilled in the art that various changes and modifications may be made without departing from the scope of the invention as defined in the following claims.

### [Description of the Symbols]

100: Electrode
110: Base collector
111: Electrode tab part
120: Unit electrode
121: Unit collector
122: Electrode active material
B: Transfer belt

## Claims

1. An electrode (100) comprising:
a base collector (110) made of a metal material; and
a unit electrode (120) attached to the base collector,
wherein the unit electrode (120) comprises:
a unit collector (121) made of a metal material and having a size less than that of the base collector (110); and
an electrode active material (122) applied on one surface of the unit collector (120), wherein the unit electrode (120) is provided in plurality, and
each of the unit electrodes (120) has a block shape.

2. The electrode (100) of claim 1, wherein the base collector (110) has a plate shape.

3. The electrode (100) of claim 1, wherein the unit collector (121) has a plate shape, and
the electrode active material (122) is applied to an entire top surface of the unit collector (121).

4. The electrode (100) of claim 1, wherein the plurality of unit electrodes (120) are arranged to form columns and rows on one surface of the base collector (110).

5. The electrode (100) of claim 1, wherein a configuration in which the plurality of unit electrodes (120) are arranged corresponds to that of the base collector (110).

6. The electrode (100) of claim 1, further comprising an electrode tab part (111) extending from one end of the base collector (110).

7. A method for manufacturing an electrode (100), the method comprising:
a unit collector manufacturing process (S10) of cutting a collector base material made of a metal material to have a predetermined area and shape on a plan view, thereby manufacturing a unit collector (121);
a unit electrode manufacturing process (S20) of applying an electrode active material (122) on one surface of the unit collector (121) to manufacture a unit electrode (120); and
a unit electrode attachment process (S30) of attaching the unit electrode (120) on a base collector (110) made of a metal material and having a size greater than that of the unit collector (121); wherein, in the unit electrode attachment process (S30), the unit electrode (120) having a block shape is attached in plurality on the base collector (110).

8. The method of claim 7, wherein, in the unit electrode attachment process (S30), the plurality of unit electrodes (120) are arranged to form columns and rows on one surface of the base collector (110).

9. The method of claim 7, wherein, in the unit electrode attachment process(S30), the plurality of unit electrodes (120) are arranged so that the configuration formed by arranging the plurality of unit electrodes (120) corresponds to that of the base collector (110).

10. The method of claim 7, further comprising a unit electrode storage process (S25) of stacking and storing the unit electrodes (120) between the unit electrode manufacturing process (S20) and the unit electrode attachment process (S30).

11. The method of claim 10, further comprising a unit electrode inspection process (S23) of inspecting whether the unit electrode (120) is defective to discard the defective unit electrode between the unit electrode manufacturing process (S20) and the unit electrode storage process (S25).

12. An electrode assembly, in which electrodes (100) and separators are alternately stacked,
wherein each of the electrodes (100) is as defined in claim 1.

## Patentansprüche

1. Elektrode (100), umfassend:
einen Basissammler (110), welcher aus einem Metallmaterial gefertigt ist; und
eine Einheitselektrode (120), welche an dem Basissammler angebracht ist, wobei die Einheitselektrode (120) umfasst:
einen Einheitssammler (121), welcher aus einem Metallmaterial gefertigt ist und eine Größe kleiner als die des Basissammlers (110) aufweist; und
ein Elektrodenaktivmaterial (122), welches an einer Fläche des Einheitssammlers (120) aufgebracht ist, wobei die Einheitselektrode (120) in einer Mehrzahl bereitgestellt ist, und
wobei jede der Einheitselektroden (120) eine Blockform aufweist.

2. Elektrode (100) nach Anspruch 1, wobei der Basissammler (110) eine Plattenform aufweist.

3. Elektrode (100) nach Anspruch 1, wobei der Einheitssammler (121) eine Plattenform aufweist, und
das Elektrodenaktivmaterial (122) auf einer gesamten oberen Fläche des Einheitssammlers (121) aufgebracht ist.

4. Elektrode (100) nach Anspruch 1, wobei die Mehrzahl von Einheitselektroden (120) angeordnet sind, um Spalten und Reihen auf einer Fläche des Basissammlers (110) zu bilden.

5. Elektrode (100) nach Anspruch 1, wobei eine Konfiguration, in welcher die Mehrzahl von Einheitselektroden (120) angeordnet sind, der des Basissammlers (110) entspricht.

6. Elektrode (100) nach Anspruch 1, ferner umfassend einen Elektrodenlaschenteil (111), welcher sich von einem Ende des Basissammlers (110) erstreckt.

7. Verfahren zum Herstellen einer Elektrode (100), wobei das Verfahren umfasst:
einen Einheitssammlerherstellungsprozess (S10) eines Schneidens eines Sammlerbasismaterials, welches aus einem Metallmaterial gefertigt ist, um eine vorbestimmte Fläche und Form in einer Draufsicht aufzuweisen, wobei ein Einheitssammler (121) hergestellt wird;
einen Einheitselektrodenherstellungsprozess (S20) eines Aufbringens eines Elektrodenaktivmaterials (122) auf eine Fläche des Einheitssammlers (121), um eine Einheitselektrode (120) herzustellen; und
einen Einheitselektrodenanbringungsprozess (S30) eines Anbringens der Einheitselektrode (120) auf einem Basissammler (110), welcher aus einem Metallmaterial gefertigt ist und eine Größe größer als die des Einheitssammlers (121) aufweist; wobei, in dem Einheitselektrodenanbringungsprozess (S30), die Einheitselektrode (120), welche eine Blockform aufweist, in einer Mehrzahl auf dem Basissammler (110) angebracht wird.

8. Verfahren nach Anspruch 7, wobei, in dem
Einheitselektrodenanbringungsprozess (S30), die Mehrzahl von Einheitselektroden (120) derart angeordnet werden, um Spalten und Reihen auf einer Fläche des Basissammlers (110) zu bilden.

9. Verfahren nach Anspruch 7, wobei, in dem
Einheitselektrodenanbringungsprozess (S30), die Mehrzahl von Einheitselektroden (120) derart angeordnet werden, dass die Konfiguration, welche durch das Anordnen der Mehrzahl von Einheitselektroden (120) gebildet wird, der des Basissammlers (110) entspricht.

10. Verfahren nach Anspruch 7, ferner umfassend einen
Einheitselektrodenlagerungsprozess (S25) eines Stapelns und Lagerns der Einheitselektroden (120) zwischen dem Einheitselektrodenherstellungsprozess (S20) und dem Einheitselektrodenanbringungsprozess (S30).

11. Verfahren nach Anspruch 10, ferner umfassend einen
Einheitselektrodenüberprüfungsprozess (S23) eines Überprüfens, ob die Einheitselektrode (120) defekt ist, um die defekte Einheitselektrode zu verwerfen, zwischen dem Einheitselektrodenherstellungsprozess (S20) und dem Einheitselektrodenlagerungsprozess (S25).

12. Elektrodenanordnung, in welcher Elektroden (100) und Separatoren alternierend gestapelt sind, wobei jede der Elektroden (100) nach Anspruch 1 realisiert ist.

## Revendications

1. Électrode (100) comprenant :
un collecteur de base (110) constitué d'un matériau métallique ; et
une électrode unitaire (120) fixée au collecteur de base, dans laquelle l'électrode unitaire (120) comprend :
un collecteur unitaire (121) constitué d'un matériau métallique et ayant une taille inférieure à celle du collecteur de base (110) ; et
un matériau actif d'électrode (122) appliqué sur une surface du collecteur unitaire (120), dans laquelle l'électrode unitaire (120) est prévue en une pluralité, et
chacune des électrodes unitaires (120) a une forme de bloc.

2. Électrode (100) selon la revendication 1, dans laquelle le collecteur de base (110) a une forme de plaque.

3. Électrode (100) selon la revendication 1, dans laquelle le collecteur unitaire (121) a une forme de plaque, et
le matériau actif d'électrode (122) est appliqué sur une surface supérieure entière du collecteur unitaire (121).

4. Électrode (100) selon la revendication 1, dans laquelle la pluralité d'électrodes unitaires (120) sont agencées pour former des colonnes et des rangées sur une surface du collecteur de base (110).

5. Électrode (100) selon la revendication 1, dans laquelle une configuration selon laquelle sont agencées la pluralité d'électrodes unitaires (120) correspond à celle du collecteur de base (110).

6. Électrode (100) selon la revendication 1, comprenant en outre une partie de languette d'électrode (111) s'étendant à partir d'une extrémité du collecteur de base (110).

7. Procédé de fabrication d'une électrode (100), le procédé comprenant :
un processus de fabrication de collecteur unitaire (S10) consistant à découper un matériau de base de collecteur constitué d'un matériau métallique pour avoir une superficie et une forme prédéterminées sur une vue en plan, fabriquant ainsi un collecteur unitaire (121) ;
un processus de fabrication d'électrode unitaire (S20) consistant à appliquer un matériau actif d'électrode (122) sur une surface du collecteur unitaire (121) pour fabriquer une électrode unitaire (120) ; et
un processus de fixation d'électrode unitaire (S30) consistant à fixer l'électrode unitaire (120) sur un collecteur de base (110) constitué d'un matériau métallique et ayant une taille supérieure à celle du collecteur unitaire (121) ; dans lequel, lors du processus de fixation d'électrode unitaire (S30), l'électrode unitaire (120) ayant une forme de bloc est fixée en pluralité sur le collecteur de base (110).

8. Procédé selon la revendication 7, dans lequel, lors du processus de fixation d'électrode unitaire (S30), la pluralité d'électrodes unitaires (120) sont agencées pour former des colonnes et des rangées sur une surface du collecteur de base (110).

9. Procédé selon la revendication 7, dans lequel, lors du processus de fixation d'électrode unitaire (S30), la pluralité d'électrodes unitaires (120) sont agencées de sorte que la configuration formée en agençant la pluralité d'électrodes unitaires (120) correspond à celle du collecteur de base (110).

10. Procédé selon la revendication 7, comprenant en outre un processus de stockage d'électrodes unitaires (S25) consistant à empiler et stocker les électrodes unitaires (120) entre le processus de fabrication d'électrode unitaire (S20) et le processus de fixation d'électrode unitaire (S30).

11. Procédé selon la revendication 10, comprenant en outre un processus d'inspection d'électrode unitaire (S23) consistant à inspecter si l'électrode unitaire (120) est défectueuse pour écarter l'électrode unitaire défectueuse entre le processus de fabrication d'électrode unitaire (S20) et le processus de stockage d'électrodes unitaires (S25).

12. Ensemble d'électrodes, dans lequel des électrodes (100) et des séparateurs sont empilés de manière alternée, dans lequel chacune des électrodes (100) est telle que définie dans la revendication 1.
